# EUROPÄISCHE PATENTSCHRIFT

(11) **EP 4 043 615 B1**
(45) Veröffentlichungstag und Bekanntmachung des Hinweises auf die Patenterteilung: **22.01.2025**
(21) Anmeldenummer: 22156377.8
(22) Anmeldetag: 11.02.2022
(51) Int. Cl.: C25B 1/04, C25B 9/70, C25B 15/00, C25B 15/021, C25B 15/08

(54) **ELEKTROLYSEANLAGE**
ELECTROLYSIS PLANT
INSTALLATION D'ÉLECTROLYSE

(30) Priorität: 11.02.2021 DE 102021103191
(43) Veröffentlichungstag der Anmeldung: 17.08.2022
(73) Patentinhaber: Kraftanlagen Energies & Services SE, 80339 München (DE)
(72) Erfinder: WEBER, Alfons, 80339 München (DE); KORFF, Christopher, 80339 München (DE); LOTTES, Daniel, 80339 München (DE)
(74) Vertreter: advotec.

(56) Entgegenhaltungen:
- EP-A1- 3 489 394
- WO-A1-2020/020611
- CN-U- 212 451 656
- DE-A1- 102014 014 091
- US-A1- 2016 194 769
- ANONYMUS: "Silyzer 300", 1 January 2018 (2018-01-01), pages 1 - 2, XP055936265, Retrieved from the Internet <URL:https://assets.new.siemens.com/siemens/assets/api/uuid:abae9c1e48d6d239c06d88e565a25040ed2078dc/version:1524040818/ct-ree-18-047-db-silyzer-300-db-de-en-rz.pdf>

## Beschreibung

Die Erfindung betrifft eine Elektrolyseanlage zur Darstellung von Wasserstoff mittels

Elektrolyse, siehe Anspruch 1. Elektrolyseanlagen sind aus der Praxis bekannt und können im industriellen Maßstab zur Darstellung bzw. Erzeugung von reinem Wasserstoff eingesetzt werden. Grundsätzlich umfasst eine Elektrolyseanlage mindestens einen Elektrolyseur, der mit Nebenanlagen verbunden ist. Der Elektrolyseur ist der Teil der Anlage, in dem die eigentliche Elektrolyse des Edukts stattfindet, das heißt, in dem beispielsweise eine Zerlegung von Wasser in Wasserstoff und Sauerstoff erfolgt. Der Elektrolyseur wird durch Anlegen einer Gleichspannung elektrisch betrieben. Die Nebenanlagen, die mit dem Elektrolyseur verbunden sind, umfassen beispielsweise Einrichtungen wie eine Wasseraufbereitungsanlage, die mit einer zu dem Elektrolyseur führenden Eduktwasserleitung verbunden ist, eine Gasaufbereitungseinrichtung, eine Gaswascheinrichtung, einen Speicher für den erzeugten Wasserstoff und/oder dergleichen.

Bisherige Elektrolyseanlagen der vorstehend beschriebenen Art, die so genannte PEM-(Proton Exchange Membrane)-Elektrolyseanlagen oder auch alkalische Elektrolyseanlagen sein können, haben insbesondere zur Darstellung von Wasserstoff im industriellen Maßstab einen sehr großen Platzbedarf, was wiederum zu langen Rohrleitungen und langen Kabeln zwischen den Nebenanlagen und den Elektrolyseuren führt. Zudem ist die Zugänglichkeit der einzelnen Komponenten, insbesondere in Notfallsituationen, aufgrund der komplexen Anordnung und der komplexen Rohrleitungs- und Kabelgeometrie teilweise schwierig. Des Weiteren ist die Anordnung der einzelnen Komponenten der Elektrolyseanlage stets an die betreffende Aufgabenstellung anzupassen. Eine Skalierung in Abhängigkeit von der Leistung der Elektrolyseanlage ist nur schwer möglich.

WO 2020/020611 A1 offenbart, entsprechend ihrer Zusammenfassung, eine Elektrolyseeinheit und ein Verfahren zum elektrochemischen Zerlegen von Wasser zu Wasserstoff und Sauerstoff. Die Elektrolyseeinheit umfasst wenigstens zwei Elektrolysemodule. Sie umfasst weiterhin genau eine erste Gasabscheidevorrichtung für ein erstes Produktgas umfassend Sauerstoff und genau eine zweite Gasabscheidevorrichtung für ein zweites Produktgas umfassend Wasserstoff. Die erste Gasabscheidevorrichtung ist mit jedem der wenigstens zwei Elektrolysemodule über jeweils eine erste Leitung verbunden. Die zweite Gasabscheidevorrichtung ist mit jedem der Elektrolysemodule über jeweils eine zweite Leitung verbunden. Dabei weisen die wenigstens zwei ersten Leitungen dieselbe erste Länge auf. Die wenigstens zwei zweiten Leitungen weisen ebenfalls dieselbe zweite Länge auf.

Der Erfindung liegt die Aufgabe zugrunde, eine Elektrolyseanlage zur Darstellung bzw. Erzeugung von Wasserstoff mittels Elektrolyse zu schaffen, die eine übersichtliche Anordnung hat und in einfacher Weise in Abhängigkeit von der gewünschten Leistung skalierbar ist.

Diese Aufgabe ist erfindungsgemäß durch die Elektrolyseanlage mit den Merkmalen des Patentanspruchs 1 gelöst.

Gemäß der Erfindung wird also eine Elektrolyseanlage zur Darstellung bzw. Erzeugung von Wasserstoff mittels Elektrolyse vorgeschlagen, umfassend zwei Elektrolyseureinheiten, die jeweils mindestens ein Elektrolyseurmodul umfassen, und eine Nebenanlageneinheit, wobei die Nebenanlageneinheit zwischen den Elektrolyseureinheiten angeordnet ist und über eine gemeinsame Rohrleitungseinheit mit beiden Elektrolyseureinheiten verbunden ist, so dass die Nebenanlageneinheit beiden Elektrolyseureinheiten gemeinsam zugeordnet ist.

Mithin wird eine Elektrolyseanlage vorgeschlagen, bei der die Elektrolyseureinheiten jeweils aus einem Elektrolyseurmodul oder aus mehreren Elektrolyseurmodulen aufgebaut sind, welche insbesondere nebeneinander angeordnet sein können. Die Elektrolyseureinheiten, die bezüglich der Nebenanlageneinheit insbesondere symmetrisch angeordnet sein können, sind mit einer gemeinsamen, mit der Nebenanlageneinheit verbundenen Rohrleitungseinheit verbunden. Damit ist es möglich, die Rohrleitungseinheit kompakt auszubilden und insbesondere die Rohrleitungen und auch Kabel, die die Nebenanlageneinheit und die Elektrolyseureinheiten miteinander verbinden, im Vergleich zu den bisher bekannten Elektrolyseanlagen kurz auszulegen. Es können direkte Leitungspfade zwischen der Nebenanlageneinheit und den Elektrolyseureinheiten gewählt werden. Dies führt zu erheblichen Kosteneinsparungen.

Durch die verringerten Wege zwischen den Elektrolyseureinheiten und der Nebenanlageneinheit können die zwischen den Komponenten verlaufenden Kabel gegenüber dem Stand der Technik kürzer gehalten werden, weswegen aufgrund des geringeren elektrischen Verlustes geringere Kabelstärken eingesetzt werden können. Auch dies senkt die Kosten der Gesamtanlage. Wenn die Kabelstärken gegenüber dem Stand der Technik gleich gehalten werden, ergibt sich aufgrund der geringeren Kabellängen ein besserer betrieblicher Wirkungsgrad.

Aufgrund der symmetrischen Anordnung der Elektrolyseureinheiten und der daraus folgenden Spiegelung der Elektrolyseurmodule, die innerhalb der Elektrolyseureinheiten aneinandergereiht sein können, kann die Elektrolyseanlage nach der Erfindung in einfacher Weise an den jeweils zur Verfügung stehenden Platz angepasst werden.

Des Weiteren ermöglicht es der Aufbau der Elektrolyseureinheiten aus insbesondere baugleichen Elektrolyseurmodulen, die Elektrolyseanlage durch Nutzung einer entsprechenden Anzahl an Elektrolyseurmodulen pro Elektrolyseureinheit in einfacher Weise an die gewünschte elektrische Leistung anzupassen. Eine einfache Skalierbarkeit der Elektrolyseanlage nach der Erfindung ist also gegeben.

Die Elektrolyseurmodule der Elektrolyseanlage nach der Erfindung haben grundsätzlich einen im Wesentlichen identischen Aufbau und sind innerhalb einer Elektrolyseureinheit in einer Linie nebeneinander angeordnet, was eine einfache Verlegung der erforderlichen Rohrleitungen der Rohrleitungseinheit und der erforderlichen Kabel ermöglicht.

Durch den modularen, symmetrischen Aufbau kann die Elektrolyseanlage nach der Erfindung in einfacher Weise an sich ändernde Bedingungen angepasst und skaliert werden. Dies spart Kosten und Zeit bei der Planung und Umsetzung einer neuen Anlage oder einer modifizierten Anlage.

Durch die Anordnung der Anlagenkomponenten in Einheiten bzw. Modulen ist es möglich, die einzelnen Einheiten bzw. Module unabhängig voneinander zu planen und zu bauen. Auch dies spart Kosten und Zeit bei der Planung und Umsetzung.

Die Aufteilung der Elektrolyseanlage in Einheiten stellt ein Anlagenkonzept dar, das ausgehend von einer ersten Ausbaustufe, in der jede Elektrolyseureinheit ein Elektrolyseurmodul umfasst, einen Ausbau um beliebig viele weitere Elektrolyseurmodule in den beiden Elektrolyseureinheiten ermöglicht. Bei der Erweiterung müssen die Komponenten der Nebenanlageneinheit und die Rohrleitungseinheit und die Rohrleitungen der Rohrleitungseinheit gegebenenfalls entsprechend angepasst bzw. skaliert werden.

Die Elektrolyseanlage nach der Erfindung kann eine alkalische Elektrolyseanlage sein, bei der die Elektrolyseurmodule jeweils mit einer Speisewasserzufuhrleitung und optional jeweils mit einer Laugenzufuhrleitung verbunden sind. Alternativ kann die Elektrolyseanlage nach der Erfindung aber auch als so genannte PEM-(Proton Exchange Membrane)-Elektrolyseanlage ausgelegt sein, bei der den Elektrolyseuren als Edukt lediglich Wasser zugeführt wird und die Elektrolyse des Wassers an einer Membran erfolgt.

Des Weiteren kann die Elektrolyseanlage nach der Erfindung mit einer hohen elektrischen Leistung ausgelegt sein, die insbesondere auch über 10 MW liegen kann.

Die Elektrolyseurmodule umfassen jeweils den eigentlichen Elektrolyseur und gegebenenfalls Komponenten, die für den betreffenden Elektrolyseur spezifisch sind, beispielsweise einen Laugenabscheider, eine Laugenpumpe oder dergleichen.

Bei der symmetrischen Anordnung der Elektrolyseureinheiten bezogen auf die Nebenanlageneinheit ist die Rohrleitungseinheit in vorteilhafter Weise derart ausgelegt, dass sie T-Stücke umfasst, die zum einen mit den beiden Elektrolyseureinheiten und zum anderen mit der Nebenanlageneinheit verbunden sind.

Die Elektrolyseurmodule der Elektrolyseanordnung nach der Erfindung sind in zweckmäßiger Weise jeweils mit einer Spannungsversorgung versehen, die einen an die erforderliche Spannung (Mittelspannung oder Niederspannung) ausgelegten Transformator und/oder einen Gleichrichter umfassen kann, der für den betreffenden Elektrolyseur erforderliche Gleichspannung bereitstellt. Es ist dann also eine Spannungsversorgung vorgesehen, die die verfügbare Versorgungsspannung (in der Regel Mittelspannung oder Hochspannung) mittels eines geeigneten Transformators und/oder eines geeigneten Gleichrichters an die für den betreffenden Elektrolyseur erforderliche Spannung anpasst.

Ensprechend der Erfindung umfassen die Elektrolyseureinheiten jeweils mindestens zwei Elektrolyseurmodule, die nebeneinander angeordnet sind. Die Anordnung der Elektrolyseurmodule kann so erfolgen, dass sie jeweils an die Nebenanlageneinheit grenzen oder bezogen auf die Symmetrieachse der Elektrolyseanlage in Querrichtung nebeneinander angeordnet sind. Die Anzahl der Elektrolyseurmodule pro Elektrolyseureinheit ist nicht beschränkt.

Die Nebenanlageneinheit der Elektrolyseanlage nach der Erfindung umfasst vorzugsweise eine Wasseraufbereitungseinrichtung, die mit einer zu den Elektrolyseurmodulen führenden Eduktleitung der Rohrleitungseinheit verbunden ist und die das bereitgestellte Rohwasser aufbereitet, um den Elektrolyseurmodulen die jeweils erforderliche Wasserqualität zur Verfügung stellen zu können. Gegebenenfalls kann ein zusätzlicher Wassertank für das aufbereitete Rohwasser erforderlich sein, der zwischen der Wasseraufbereitungseinrichtung und der Eduktleitung angeordnet ist.

Bei Auslegung der Elektrolyseanlage nach der Erfindung als alkalische Elektrolyseanlage umfasst die Nebenanlageneinheit vorzugsweise einen Laugentank, der mit einer Laugenleitung der Rohrleitungseinheit verbunden ist, die zu den Elektrolyseureinheiten führt. Die in dem Laugentank vorgehaltene Lauge wird für die Inbetriebsetzung, die Wartung und den Austausch der Lauge in den Elektrolyseurmodulen benötigt.

Bei einer bevorzugten Ausführungsform der Elektrolyseanlage nach der Erfindung umfasst die Nebenanlageneinheit einen Wasserstoffspeicher, der mit einer Wasserstoffabgabeleitung verbunden ist, welche mittelbar oder unmittelbar mit einer Produktleitung der Rohrleitungseinheit verbunden ist. In dem Wasserstoffspeicher kann also das Produktgas Wasserstoff gespeichert werden. Zudem kann eine Wasserstoffaufbereitungseinrichtung vorgesehen sein, welche der Wasserstoffabgabeleitung vorgeschaltet ist. Auch ein Gaswäscher für den erzeugten Wasserstoff ist entsprechend der Erfindung stromauf der Wasserstoffabgabeleitung angeordnet sein. In dem Gaswäscher wird bei einer alkalischen Elektrolyse etwaige Lauge aus dem Produktgas Wasserstoff ausgewaschen und dann zusammen mit dem Speisewasser wieder den Elektrolyseuren zugeführt. All diese Elemente sind vorzugsweise Elemente Bestandteil der gemeinsamen zentralen Nebenanlageneinheit.

Zusätzlich kann die Elektrolyseanlage nach der Erfindung auch einen in der Nebenanlageneinheit angeordneten Sauerstoffspeicher umfassen, der mit einer Sauerstoffabgabeleitung verbunden ist und zur Speicherung des anderen Produktgases Sauerstoff dient. Stromauf der Sauerstoffabgabeleitung können eine Sauerstoffaufbereitungseinrichtung und/oder ein Gaswäscher für den erzeugten Sauerstoff angeordnet sein.

Die Produktgasspeicher können bei einer direkten Abnahme der produzierten Produktgase entfallen. Wenn der dargestellte Sauerstoff nicht verwendet wird, können natürlich der Sauerstoffspeicher und die Sauerstoffabgabeleitung entfallen. Auch die Sauerstoffaufbereitungseinrichtung und der Gaswäscher für Sauerstoff können dann entfallen.

Um die Produktqualität zu erhöhen, kann die Nebenanlageneinheit der Elektrolyseanlage nach der Erfindung eine Gasaufbereitungseinrichtung umfassen, die mit der Wasserstoffabgabeleitung verbunden ist. Eine entsprechende Gasaufbereitungseinrichtung kann für Sauerstoff vorgesehen sein, der das andere Produktgas darstellt. Die Gasaufbereitungseinrichtungen können Komponenten zur Trocknung der Produktgase und zur sonstigen Nachbehandlung der Produktgase umfassen.

Des Weiteren kann die Nebenanlageneinheit für die Produktgase jeweils eine Komprimierungseinrichtung umfassen, die mit der jeweiligen Gasaufbereitungseinrichtung verbunden sein kann. Damit können die Produktgase mit dem jeweils erforderlichen Gasdruck bereitgestellt werden.

Bei einer weiteren speziellen Ausführungsform der Elektrolyseanlage nach der Erfindung umfasst die Nebenanlageneinheit einen Stickstoffspeicher, der mit einer Stickstoffleitung der Rohrleitungseinheit verbunden ist. Über die Stickstoffleitung kann den Elektrolyseureinheiten jeweils in Form von Stickstoff ein Inertgas zugeführt werden, beispielsweise für eine Systemspülung.

Die Speicherung des Stickstoffs kann flüssig oder gasförmig erfolgen. Wenn der Stickstoff in flüssiger Form gespeichert wird, ist zusätzlich ein Stickstoffverdampfer erforderlich. Weitere, in üblicher Weise ausgebildete Peripheriekomponenten gewährleisten, dass für eine Systemspülung der Stickstoff mit einem definierten Volumenstrom, in einem definierten Druckbereich, in einem definierten Temperaturbereich und mit einer definierten Qualität an den relevanten Stellen der Elektrolyseanlage bereitgestellt wird.

Die Nebenanlageneinheit umfasst des Weiteren vorzugsweise eine Steuer- und/oder Überwachungseinrichtung für Komponenten der Nebenanlageneinheit und Komponenten der Elektrolyseurmodule. Denkbar ist es, dass die Steuer- und/oder Überwachungseinrichtung, die den Betrieb der Elektrolyseanlage steuert, zusätzlich mit einer Remote-Steuer- und/oder Überwachungseinrichtung des Betreibers der Elektrolyseanlage verbunden ist, die außerhalb der eigentlichen Elektrolyseanlage angeordnet ist.

Um die Elektrolyseurmodule bei den erforderlichen Umgebungsbedingungen betreiben zu können, umfasst die Nebenanlageneinheit der Elektrolyseanlage nach der Erfindung vorzugsweise eine Klimatisierungseinrichtung für die Elektrolyseurmodule, welche eine Heizeinrichtung, eine Kühleinrichtung und/oder eine Lüftungseinrichtung umfassen kann.

Die Elektrolyseanlage nach der Erfindung umfasst eine Kühleinrichtung für die Elektrolyseurmodule, die mit der Rohrleitungseinheit verbunden ist, so dass über entsprechende Rohrleitungen die Elektrolyseurmodule im Betrieb mittels eines Kühlmittels gekühlt werden können. Da die Kühleinrichtung bei Auslegung der Elektrolyseanlage im industriellen Maßstab einen großen Platzbedarf hat, ist sie vorzugsweise in einer separaten Einheit angeordnet, die außerhalb der Elektrolyseureinheiten und außerhalb der Nebenanlageneinheit angeordnet ist. Zweckmäßig ist es, wenn die Kühleinrichtung auf einem Dach eines Gebäudes der Elektrolyseanlage und/oder in unmittelbarer Nähe zumindest einer der Elektrolyseuereinheiten oder der Nebenanlageneinheit angeordnet ist, wodurch Kühlwasserleitungen kurz gehalten werden können. Die Kühleinrichtung kann auch zur Kühlung von Komponenten der Nebenanlageneinheit genutzt werden.

Bei einer speziellen Ausführungsform der Elektrolyseanlage nach der Erfindung sind die Elektrolyseurmodule unter einer Überdachung der jeweiligen Elektrolyseureinheit angeordnet. Insbesondere sind die Elektrolyseurmodule in einem in Leichtbauweise gehaltenen Gebäude der Elektrolyseanlage angeordnet, das vorzugsweise an einen Gebäudeteil angrenzt, in dem ein Gleichrichter und/oder ein Transformator des betreffenden Elektrolyseurmoduls angeordnet sein kann.

Die Nebenanlageneinheit kann einen überdachten Innenbereich und/oder einen nach oben offenen Außenbereich umfassen. In dem nach oben offenen Außenbereich können Speicher, Tanks, Gaswäscher, Gasometer und/oder dergleichen angeordnet sein. In dem überdachten Innenbereich, der vorzugsweise aus einem in Massivbauweise gehaltenen Gebäude gebildet ist, sind beispielsweise die Steuer- und/oder Überwachungseinrichtung, die Wasseraufbereitungseinrichtung, die Klimatisierungseinrichtung, Kompressoren zur Gaskomprimierung, Gasaufbereitungseinrichtungen, Gasanalysekomponenten und/oder dergleichen angeordnet.

Weitere Vorteile und vorteilhafte Ausgestaltungen des Gegenstandes der Erfindung sind der Beschreibung, der Zeichnung und den Patentansprüchen entnehmbar. Ausführungsbeispiele einer Elektrolyseanlage nach der Erfindung sind in der Zeichnung schematisch vereinfacht dargestellt und werden in der nachfolgenden Beschreibung näher erläutert. Es zeigt:
- Figur 1: eine schematische Darstellung einer alkalischen Elektrolyseanlage in einer ersten Ausbaustufe, die nicht einen Teil der Erfindung darstellt.

- Figur 2: eine schematische Darstellung einer alkalischen Elektrolyseanlage in einer zweiten Ausbaustufe;
- Figur 3: eine schematische Darstellung einer alkalischen Elektrolyseanlage in einer dritten Ausbaustufe; und
- Figur 4: eine schematische Darstellung einer PEM-Elektrolyseanlage in einer zweiten Ausbaustufe, die nicht einen Teil der Erfindung darstellt.

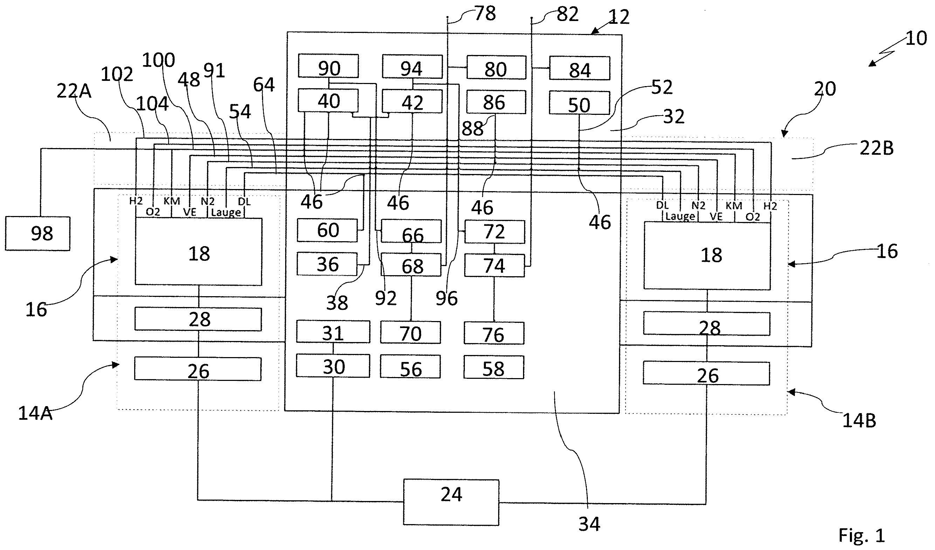

In Figur 1 ist eine Elektrolyseanlage 10 (nicht Teil der Erfindung) dargestellt, welche einen modulartigen Aufbau hat und in zentraler Anordnung eine Nebenanlageneinheit 12 umfasst, neben der in symmetrischer Anordnung beidseits jeweils eine Elektrolyseureinheit 14A bzw. 14B angeordnet ist. Mittels der Elektrolyseureinheiten 14A und 14B, die jeweils ein Elektrolyseurmodul 16 mit einem Alkali-Elektrolyseur 18 umfassen, erfolgt die Darstellung bzw. Herstellung der Produktgase Wasserstoff H₂ und Sauerstoff O₂ ausgehend von Eduktwasser bzw. Speisewasser VE.

Die Elektrolyseureinheiten 14A und 14B sind über eine gemeinsame Rohrleitungseinheit 20 und nicht näher dargestellte Kabel mit der Nebenanlageneinheit 12 verbunden. Die Rohrleitungseinheit 20 umfasst eine Vielzahl von Rohrleitungen, welche über so genannte Rohrbrücken 22A und 22B von der Nebenanlageneinheit 12 zu den Elektrolyseureinheiten 14A und 14B geführt sind. Die Elektrolyseurmodule 16 sind jeweils mit einer Spannungsversorgung verbunden, welche mit einem zentralen Hochspannungstransformator 24 verbunden ist, der mit einer Schaltanlage versehen ist und eine Hochspannungswechselspannung in eine Mittelspannungswechselspannung transformiert. Die von dem Hochspannungstransformator 24 abgegebene Mittelspannung wird mittels eines Mittelspannungstransformators 26, der dem jeweiligen Elektrolyseurmodul 16 zugeordnet ist, in eine niedrigere Mittelspannung oder in eine Niederspannung umgesetzt, welche mittels eines jeweiligen Gleichrichters 28 in eine Gleichspannung umgesetzt wird, die zum Betrieb des jeweiligen Elektrolyseurs 18 bereitgestellt bzw. benötigt wird.

Die Mittelspannungstransformatoren 26 sind vorliegend in einem Außenbereich der jeweiligen Elektrolyseureinheit 14A bzw. 14B angeordnet. Die Gleichrichter 28 sind in einem Massivbau-Gebäudeteil angeordnet, der an einen Leichtbau-Gebäudeteil angrenzt, in dem der betreffende Elektrolyseur 18 angeordnet ist.

Die Schaltanlage des Hochspannungstransformators 24 dient zur Verteilung der Spannungen auf die verschiedenen Mittelspannungstransformatoren 26 und einen Mittelspannungstransformator 30 der Nebenanlageneinheit 12. Der Mittelspannungstransformator 30 der Nebenanlageneinheit 12 gibt eine Niederspannung aus, die mittels einer Niederspannungsunterverteilungseinrichtung 31 an betreffende Komponenten der Elektrolyseanlage 10 verteilt werden kann. Je nach erforderlicher elektrischer Anschlussleistung ist es denkbar, dass diese Komponenten auch direkt mit Mittelspannung betrieben werden.

Die Nebenanlageneinheit 12 umfasst einen Außenbereich 32, welcher nach oben offen, das heißt nicht überdacht ist, und einen Innenbereich 34, der in einem in Massivbauweise hergestellten Gebäude mit Überdachung angeordnet ist.

In dem Innenbereich 34 der Nebenanlageneinheit 12 ist neben dem Mittelspannungstransformator 30 und der Niederspannungsverteilungseinrichtung 31 eine Wasseraufbereitungseinrichtung 36 angeordnet, die über eine Leitung 38 mit zwei Gaswäschern 40 und 42 verbunden ist. Der Gaswäscher 40, der im Außenbereich 32 der Nebenanlageneinheit 12 angeordnet ist, ist wiederum über eine Leitung 44 mit einem T-Stück 46 verbunden, das in einer Eduktleitung 48 angeordnet ist, die Speisewasser VE als Edukt zu den Elektrolyseuren 18 führt.

In dem Innenbereich 34 der Nebenanlageneinheit 12 sind des Weiteren eine Steuer- und Überwachungseinrichtung 56 für die Komponenten der Elektrolyseanlage 10 und eine Klimatisierungseinrichtung 58 angeordnet, mittels der eine Beheizung, Kühlung und/oder Lüftung der einzelnen Komponenten der Elektrolyseanlage 10 erfolgen kann. Zudem ist im Innenbereich 34 eine Drucklufterzeugungseinrichtung 60 mit entsprechenden Peripherieelementen angeordnet, die über eine Druckluftleitung 62 mit einem T-Stück 46 einer Druckluftleitung 64 der Rohrleitungseinheit 20 verbunden ist, wobei die in der Druckluftleitung 62 geführte Druckluft DL zum Schalten der nicht näher dargestellten Ventile der Elektrolyseanlage 10 genutzt werden kann. Die Drucklufterzeugungseinrichtung 60 gewährleistet, dass die Druckluft mit einem definierten Volumenstrom, einem definierten Druck, einer definierten Temperatur und einer definierten Qualität an den relevanten Schnittstellen bzw. Ventilen der Elektrolyseanlage 10 bereitgestellt wird.

Der Innenbereich 34 der Nebenanlageneinheit 12 umfasst des Weiteren für das Produktgas Wasserstoff H₂ einen Kompressor 66, eine Gasaufbereitungseinrichtung 68 und eine Gasanalyseeinrichtung 70 und für das Produktgas Sauerstoff O₂ einen Kompressor 72, eine Gasaufbereitungseinrichtung 74 und eine Gasanalyseeinrichtung 76.

Von der Gasaufbereitungseinrichtung 68 für Wasserstoff H₂ zweigt eine Wasserstoffabgabeleitung 78 ab, die in den Außenbereich 32 der Nebenanlageneinheit 12 führt und mit einem Wasserstoffspeicher 80 verbunden ist. Von der Gasaufbereitungseinrichtung 74 für Sauerstoff O₂ zweigt eine Sauerstoffabgabeleitung 82 ab, die mit einem Sauerstoffspeicher 84 verbunden ist, der in dem Außenbereich 32 angeordnet ist.

In dem Außenbereich 32 der Nebenanlageneinheit 12 ist zudem ein Laugentank 50 angeordnet, der über eine Leitung 52 mit einem T-Stück 46 einer Laugenleitung 54 verbunden ist, über welche den Elektrolyseuren 18 Lauge zuführbar ist.

In dem Außenbereich 32 der Nebenanlageneinheit 12 ist des Weiteren ein Stickstoffspeicher 86 mit entsprechenden Peripherieeinrichtungen angeordnet, der über eine Leitung 88 mit einem T-Stück 46 einer Stickstoffleitung 91 verbunden ist, über die zur Systemspülung Stickstoff N₂ den Elektrolyseuren 18 als Inertgas zugeführt werden kann.

Dem Gaswäscher 40 für Wasserstoff H₂ ist im Außenbereich 32 der Nebenanlageneinheit 12 ein Gasometer 90 zugeordnet, das zum Sicherstellen eines konstanten Gasdrucks und als Puffer dient, wobei zwischen dem Gaswäscher 40 und dem Gasometer 90 eine Produktleitung 92 abzweigt, die zu dem Kompressor 66 für Wasserstoff H₂ führt.

Dem Gaswäscher 42 für Sauerstoff O₂ ist ein Gasometer 94 zugeordnet, das ebenfalls zum Sicherstellen eines konstanten Gasdrucks und als Puffer dient, wobei zwischen dem Gaswäscher 42 und dem Gasometer 94 eine Produktleitung 96 abzweigt, die zu dem Kompressor 72 für Sauerstoff O₂ führt.

Außerhalb der Elektrolyseureinheiten 14A und 14B und der Nebenanlageneinheit 12 ist eine Kühleinrichtung 98 angeordnet, die mit einer Kühlmittelleitung 100 der Rohrleitungseinheit 20 verbunden ist, über die den Elektrolyseuren 18 Kühlmittel KM zugeführt werden kann.

Von den Elektrolyseuren 18 zweigt eine Wasserstoffproduktleitung 102 ab, die über ein T-Stück 46 mit dem Gaswäscher 40 für Wasserstoff H₂ verbunden ist. Zudem zweigt von den Elektrolyseuren 18 eine Sauerstoffproduktleitung 104 ab, die über ein T-Stück 46 mit dem Gaswäscher 42 für Sauerstoff O₂ verbunden ist.

Im Betrieb wird zur Darstellung von Wasserstoff H₂ und Sauerstoff O₂ mittels der Wasseraufbereitungseinrichtung 36 Speisewasser VE bereitgestellt und durch die Gaswäscher 40 und 42 geführt. Das durch den Gaswäscher 40 geführte Speisewasser VE wird über die Eduktleitung 48 den Elektrolyseuren 18 zugeführt, die jeweils mit Lauge (insbesondere KOH) als Elektrolyt befüllt sind. Durch Anlegen der von den Gleichrichtern 28 bereitgestellten Gleichspannung erfolgt in den Elektrolyseuren 18 eine Elektrolyse, so dass über die Produktleitung 102 Wasserstoff H₂ und über die Produktleitung 104 Sauerstoff O₂ abgeführt werden kann. Der Wasserstoff, der noch mit Laugenresten verunreinigt ist, wird durch den Gaswäscher 40 geleitet und dann über die Leitung 92 und den Kompressor 66 der Gasaufbereitungseinrichtung 68 zugeführt. Von dort wird er über die Wasserstoffabgabeleitung 78 in den Wasserstoffspeicher 80 geleitet. In dem Gaswäscher 40 wird durch das im Gegenstrom hindurchgeleitete Wasser die Restlauge von dem Wasserstoff H₂ getrennt und über die Eduktleitung 48 zusammen mit dem Speisewasser VE in die Elektrolyseure 18 zurückgeführt.

Der Sauerstoff O₂, der von den Elektrolyseuren 18 erzeugt wurde, wird über die Produktleitung 104 dem Gaswäscher 42 zugeführt und von dort über die Produktleitung 96 und den Kompressor 72 der Gasaufbereitungseinrichtung 74 zugeführt. Von dort wird der in dem Gaswäscher 42 von Restlauge gereinigte Sauerstoff O₂ über die Sauerstoffabgabeleitung 82 in den Sauerstoffspeicher 84 geleitet. Diese Restlauge wird ebenfalls zusammen mit dem Speisewasser VE in die Elektrolyseure 18 zurückgeführt. In den Gasaufbereitungseinrichtungen 68 und 74 werden die Produktgase Wasserstoff H₂ und Sauerstoff O₂ aufbereitet und weiter gereinigt, um die geforderte Gasqualität zu erreichen.

Die Gasanalyseeinrichtungen 70 und 76 dienen zur Überprüfung der Qualität der Produktgase Wasserstoff H₂ und Sauerstoff O₂.

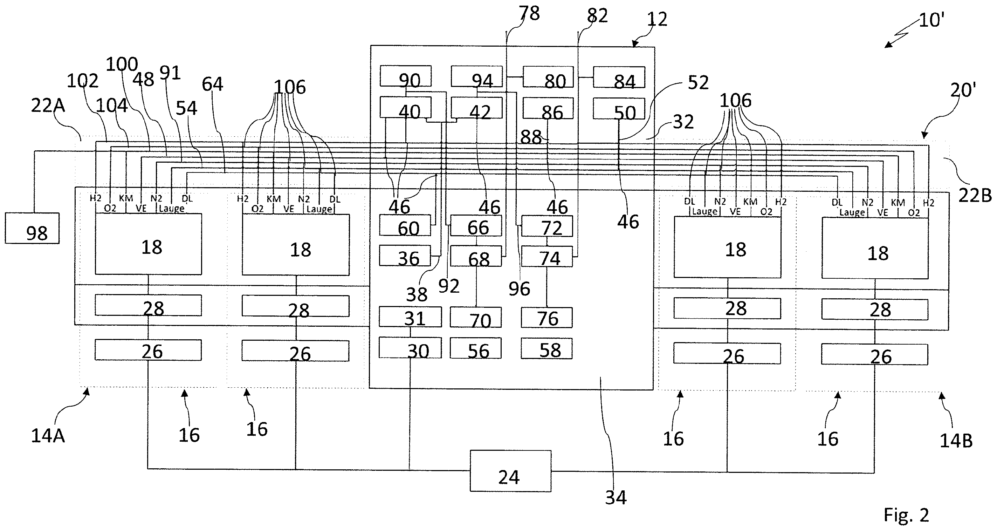

In Figur 2 ist eine Elektrolyseanlage 10' entsprechend der Erfindung dargestellt, die entsprechend der Elektrolyseanlage nach Figur 1 eine zentrale Nebenanlageneinheit 12 und bezogen auf eine Symmetrieachse der Elektrolyseanlage 10 beidseits der Nebenanlageneinheit 12 jeweils eine Elektrolyseureinheit 14A bzw. 14B umfasst. Jedoch stellt die Elektrolyseanlage 10' eine zweite Ausbaustufe dar, da die Elektrolyseureinheiten 14A und 14B jeweils zwei nebeneinander angeordnete Elektrolyseurmodule 16 umfassen, die in der gemäß der anhand von Figur 1 beschriebenen Art über eine gemeinsame Rohrleitungseinheit 20' mit der zentralen Nebenanlageneinheit 12 verbunden sind. Zur Verbindung der bezogen auf die Nebenanlageneinheit 12 außen liegenden Elektrolyseurmodule 16 mit der Rohrleitungseinheit 20' weisen die entsprechenden Rohrleitungen 48, 54, 64, 91, 100, 102 und 104 zusätzliche T-Stücke 106 auf.

Im Übrigen entspricht die Elektrolyseuranlage 10' hinsichtlich Funktion und Aufbau derjenigen nach Figur 1, weshalb auf die diesbezügliche Beschreibung verwiesen wird.

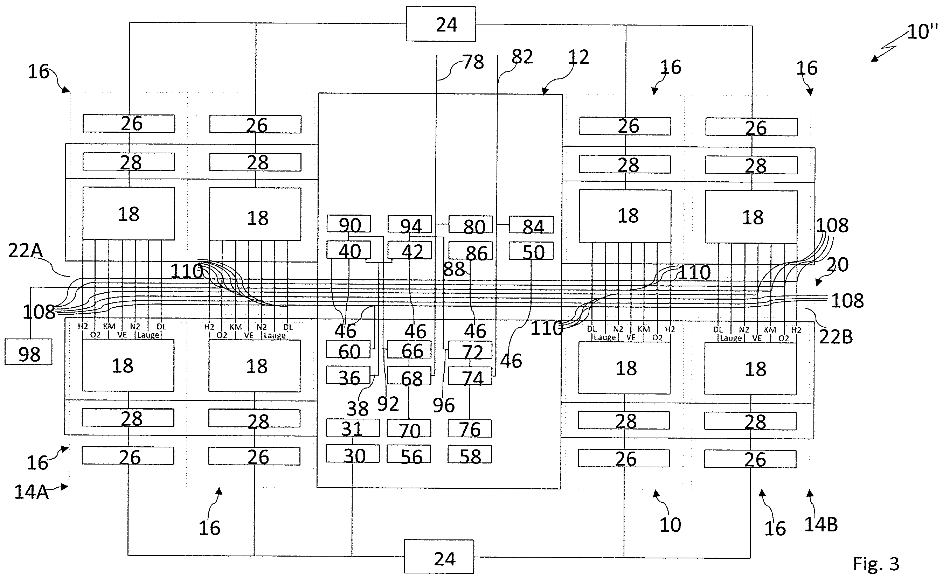

In Figur 3 ist eine alkalische Elektrolyseanlage 10" entsprechend der Erfindung dargestellt, welche eine dritte Ausbaustufe darstellt und ebenfalls eine zentrale Nebenanlageneinheit 12 umfasst, welche bezogen auf eine Symmetrieachse der Anlage 10" beidseits jeweils eine Elektrolyseureinheit 14A bzw. 14B umfasst, die jedoch vier Elektrolyseurmodule 16 mit dem anhand von Figur 1 beschriebenen Aufbau umfasst. Die jeweils vier Elektrolyseurmodule 16 sind über T-Stücke 108 und Kreuzungsstücke 110 mit einer gemeinsamen Rohrleitungseinheit 20" verbunden, die die Elektrolyseurmodule 16 mit der Nebenanlageneinheit 12 verbindet. Die Nebenanlageneinheit 12 entspricht dem Aufbau der Nebenanlageneinheit nach Figur 1.

Im Übrigen entsprechen der Aufbau und die Funktion der Elektrolyseuranlage 10" ebenfalls dem Aufbau und der Funktion der Elektrolyseanlage nach Figur 1, weshalb auf die diesbezügliche Beschreibung verwiesen wird.

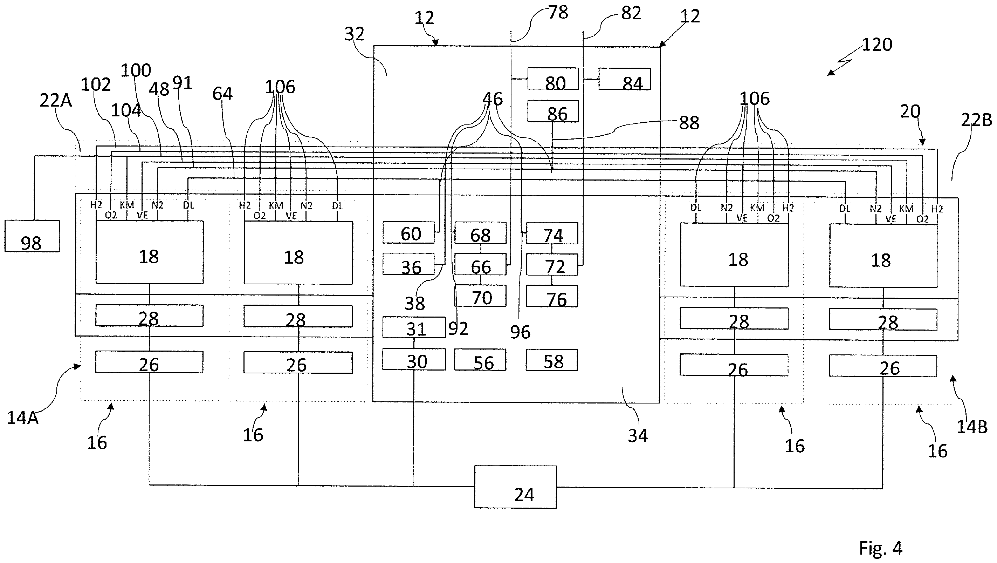

In Figur 4 ist eine zweite Ausbaustufe einer PEM-Elektrolyseanlage 120 (nicht Teil der Erfindung) dargestellt, die ebenfalls eine zentrale Nebenanlageneinheit 12 umfasst, die zwischen zwei Elektrolyseureinheiten 14A und 14B angeordnet sind, die jeweils zwei Elektrolyseurmodule 16 umfassen, deren Elektrolyseure 18 jeweils als PEM-Elektrolyseur ausgebildet sind, in dem Wasser an einer Membran in Wasserstoff H₂ und Sauerstoff O₂ zerlegt wird und der laugenfrei arbeitet.

Die Nebenanlageneinheit 12 unterscheidet sich von der Nebenanlageneinheit der Ausführungsformen nach den Figuren 1 bis 3 daher dadurch, dass kein Laugentank und keine Gaswäscher mit Gasometern in dem Außenbereich 32 angeordnet sind. Vielmehr werden die von den Elektrolyseuren 18 erzeugten Produktgase Wasserstoff H₂ und Sauerstoff O₂ über die Wasserstoffproduktleitung 102 und die Sauerstoffproduktleitung 104 und über entsprechende T-Stücke 46 der Rohrleitungseinheit 20 direkt entsprechenden Gasaufbereitungseinrichtungen 68 und 74 zugeführt. Das mittels einer Wasseraufbereitungseinrichtung 36 hergestellte Speisewasser VE (ggfs. vollentsalztes Wasser) wird direkt ohne Zwischenschaltung von Gaswäschern über ein T-Stück 46 in die Eduktleitung 48 geführt und den Elektrolyseuren 18 zur Elektrolyse bereitgestellt.

Im Übrigen entspricht der Aufbau der Elektrolyseanlage 120 im Wesentlichen dem Aufbau der Elektrolyseanlage nach Figur 2, weshalb zur Vermeidung von Wiederholungen auf die diesbezügliche Beschreibung bzw. die Beschreibung der Elektrolyseanlage nach Figur 1 verwiesen wird.

Bei einer Ausführungsform einer Elektrolyseanlage, die unter Atmosphärendruck arbeitet, ist noch ein Kompressor stromauf der Gasaufbereitungseinrichtungen erforderlich.

Entsprechend der alkalischen Elektrolyseanlage kann die PEM-Elektrolyseanlage in einer ersten Ausbaustufe pro Elektrolyseureinheit 14A und 14B nur ein Elektrolyseurmodul 16 umfassen. In einer dritten Ausbaustufe kann die PEM-Elektrolyseanlage entsprechend der Ausführungsform nach Figur 3 auch vier Elektrolyseurmodule 16 pro Elektrolyseureinheit umfassen. Auch Ausbaustufen mit drei nebeneinander angeordneten Elektrolyseurmodulen oder mit einer anderen Elektrolyseurmodulanzahl pro Elektrolyseureinheit sind denkbar.

### Bezugszeichenliste

- 10, 10', 10": alkalische Elektrolyseanlage
- 12: Nebenanlageneinheit
- 14A, B: Elektrolyseureinheit
- 16: Elektrolyseurmodul
- 18: Elektrolyseur
- 20, 20', 20": Rohrleitungseinheit
- 22A, B: Rohrbrücke
- 24: Hochspannungstransformator
- 26: Mittelspannungstransformator
- 28: Gleichrichter
- 30: Mittelspannungstransformator
- 31: Niederspannungsunterverteilungseinrichtung
- 32: Außenbereich
- 34: Innenbereich
- 36: Wasseraufbereitungseinrichtung
- 38: Leitung
- 40: Gaswäscher
- 42: Gaswäscher
- 44: Leitung
- 46: T-Stück
- 48: Eduktleitung
- 50: Laugentank
- 52: Leitung
- 54: Laugenleitung
- 56: Steuer- und Überwachungseinrichtung
- 58: Klimatisierungseinrichtung
- 60: Drucklufterzeugungseinrichtung
- 62: Druckluftleitung
- 64: Druckluftleitung
- 66: Kompressor
- 68: Gasaufbereitungseinrichtung
- 70: Gasanalyseeinrichtung
- 72: Kompressor
- 74: Gasaufbereitungseinrichtung
- 76: Gasanalyseeinrichtung
- 78: Wasserstoffabgabeleitung
- 80: Wasserstoffspeicher
- 82: Sauerstoffabgabeleitung
- 84: Sauerstoffspeicher
- 86: Stickstoffspeicher
- 88: Leitung
- 90: Gasometer
- 91: Stickstoffleitung
- 92: Produktleitung
- 94: Gasometer
- 96: Produktleitung
- 98: Kühleinrichtung
- 100: Kühlmittelleitung
- 102: Wasserstoffproduktleitung
- 104: Sauerstoffproduktleitung
- 106: T-Stück
- 108: T-Stück
- 110: Kreuzungsstück
- 120: PEM-Elektrolyseanlage

- DL: Druckluft
- KM: Kühlmittel
- VE: Speisewasser
- H₂: Wasserstoff
- N₂: Stickstoff
- O₂: Sauerstoff

## Patentansprüche

1. Elektrolyseanlage zur Darstellung von Wasserstoff mittels Elektrolyse, umfassend einen zentralen Hochspannungstransformator (24), zwei Elektrolyseureinheiten (14A, 14B), die jeweils mindestens zwei nebeneinander angeordnete Elektrolyseurmodule (16) umfassen, die jeweils einen Elektrolyseur (18) und eine Spannungsversorgung umfassen, die einen Transformator (26) und/oder einen Gleichrichter (28) umfasst, und eine Nebenanlageneinheit (12), wobei die Spannungsversorgungen der Elektrolyseurmodule (16) mit dem zentralen Hochspannungstransformator (24) verbunden sind und die Nebenanlageneinheit (12) zwischen den Elektrolyseureinheiten (14A, 14B) angeordnet ist und über eine gemeinsame Rohrleitungseinheit (20) mit beiden Elektrolyseureinheiten (14A, 14B) verbunden ist, so dass die Nebenanlageneinheit (12) beiden Elektrolyseureinheiten (14A, 14B) gemeinsam zugeordnet ist, wobei die gemeinsame Rohrleitungseinheit (20) eine Vielzahl von Rohrleitungen umfasst, welche von der Nebenanlageneinheit (12) zu den Elektrolyseureinheiten (14A, 14B) geführt sind, wobei die Nebenanlageneinheit (12) einen Gaswäscher (49) für Wasserstoff umfasst, der über ein T-Stück (46) mit einer Wasserstoffproduktleitung (102) der Rohrleitungseinheit (2) verbunden ist, die von den Elektrolyseuren (18) abzweigt, und wobei eine Kühleinrichtung (98) für die Elektrolyseurmodule (16) vorgesehen ist, die mit der Rohrleitungseinheit (20) verbunden ist.

2. Elektrolyseanlage nach Anspruch 1, **dadurch gekennzeichnet, dass** die Anordnung der Elektrolyseureinheiten (14A, 14B) bezogen auf die Nebenanlageneinheit (12) symmetrisch ist.

3. Elektrolyseanlage nach Anspruch 1 oder 2, **dadurch gekennzeichnet, dass** die Rohrleitungseinheit (20) T-Stücke (46) umfasst, die mit beiden Elektrolyseureinheiten (14A, 14B) verbunden sind.

4. Elektrolyseanlage nach einem der Ansprüche 1 bis 3, **dadurch gekennzeichnet, dass** die Nebenanlageneinheit (12) eine Wasseraufbereitungseinrichtung (36) umfasst, die direkt oder indirekt mit einer Eduktleitung (48) der Rohrleitungseinheit (20) verbunden ist.

5. Elektrolyseanlage nach einem der Ansprüche 1 bis 4, **dadurch gekennzeichnet, dass** die Nebenanlageneinheit (12) einen Laugentank (50) umfasst, der mit einer Laugenleitung (54) der Rohrleitungseinheit (20) verbunden ist.

6. Elektrolyseanlage nach einem der Ansprüche 1 bis 5, **dadurch gekennzeichnet, dass** die Nebenanlageneinheit (12) einen Wasserstoffspeicher (80) umfasst, der mit einer Wasserstoffabgabeleitung (78) verbunden ist, die mittelbar oder unmittelbar mit einer Produktleitung (102) der Rohrleitungseinheit verbunden ist.

7. Elektrolyseanlage nach Anspruch 6, **dadurch gekennzeichnet, dass** die Nebenanlageneinheit (12) eine Gasaufbereitungseinrichtung (68) umfasst, die mit der Wasserstoffabgabeleitung (78) verbunden ist.

8. Elektrolyseanlage nach Anspruch 7, **dadurch gekennzeichnet, dass** die Nebenanlageneinheit (12) einen Kompressor (66) umfasst, der mit der Gasaufbereitungseinrichtung (68) verbunden ist.

9. Elektrolyseanlage nach einem der Ansprüche 1 bis 8, **dadurch gekennzeichnet, dass** die Nebenanlageneinheit (12) einen Stickstoffspeicher (86) umfasst, der mit einer Stickstoffleitung (91) der Rohrleitungseinheit (20) verbunden ist.

10. Elektrolyseanlage nach einem der Ansprüche 1 bis 9, **dadurch gekennzeichnet, dass** die Nebenanlageneinheit (12) eine Steuer- und/oder Überwachungseinrichtung (56) für Komponenten der Nebenanlageneinheit (12) und Komponenten der Elektrolyseurmodule (16) umfasst.

11. Elektrolyseanlage nach einem der Ansprüche 1 bis 10 **dadurch gekennzeichnet, dass** die Nebenanlageneinheit (12) eine Klimatisierungseinrichtung (58) für die Elektrolyseurmodule (16) umfasst.

12. Elektrolyseanlage nach einem der Ansprüche 1 bis 11, **dadurch gekennzeichnet, dass** die Elektrolyseurmodule (16) unter einer Überdachung der jeweiligen Elektrolyseureinheit (14A, 14B) angeordnet sind.

13. Elektrolyseanlage nach einem der Ansprüche 1 bis 12, **dadurch gekennzeichnet, dass** die Nebenanlageneinheit (12) einen überdachten Innenbereich (34) umfasst.

14. Elektrolyseanlage nach einem der Ansprüche 1 bis 13, **dadurch gekennzeichnet, dass** die Nebenanlageneinheit (12) einen nach oben offenen Außenbereich (32) umfasst.

## Claims

1. An electrolysis plant for displaying hydrogen by means of electrolysis, the electrolysis plant comprising a central high-voltage transformer (24), two electrolyzer units (14A, 14B), which each comprise at least two adjacent electrolyzer modules (16), which each comprise an electrolyzer (18) and a power supply comprising a transformer (26) and/or a rectifier (28), and an auxiliary plant unit (12), the power supplies of the electrolyzer module (16) being connected to the central high-voltage transformer (24) and the auxiliary plant unit (12) being disposed between the electrolyzer units (14A, 14B) and connected to both electrolyzer units (14A, 14B) via a shared pipe unit (20) so that the auxiliary plant unit (12) is associated with both electrolyzer units (14A, 14B) together, the shared pipe unit (20) comprising a plurality of pipes which extend from the auxiliary plant unit (12) to the electrolyzer units (14A, 14B), the auxiliary plant unit (12) comprising a gas scrubber (49) for hydrogen, which is connected to a hydrogen product pipe (102) of the pipe unit (20) via a tee (46), the hydrogen product pipe (102) branching off of the electrolyzers (18), and a cooling device (98) being provided for the electrolyzer modules (16) and connected to the pipe unit (20).

2. The electrolysis plant according to claim 1, **characterized in that** the arrangement of the electrolyzer units (14A, 14B) is symmetrical with respect to the auxiliary plant unit (12).

3. The electrolysis plant according to claim 1 or 2, **characterized in that** the pipe unit (20) comprises tees (46) which are connected to both electrolyzer units (14A, 14B).

4. The electrolysis plant according to any one of the claims 1 to 3, **characterized in that** the auxiliary plant unit (12) comprises a water-treatment device (36) which is directly or indirectly connected to an educt pipe (48) of the pipe unit (20).

5. The electrolysis plant according to any one of the claims 1 to 4, **characterized in that** the auxiliary plant unit (12) comprises a lye tank (50) which is connected to a lye pipe (54) of the pipe unit (20).

6. The electrolysis plant according to any one of the claims 1 to 5, **characterized in that** the auxiliary plant unit (12) comprises a hydrogen tank (80) which is connected to a hydrogen discharge pipe (78) connected directly or indirectly to a product pipe (102) of the pipe unit (20).

7. The electrolysis plant according to claim 6, **characterized in that** the auxiliary plant unit (12) comprises a gas-treatment device (68) which is connected to the hydrogen discharge pipe (78).

8. The electrolysis plant according to claim 7, **characterized in that** the auxiliary plant unit (12) comprises a compressor (66) which is connected to the gas treatment device (68).

9. The electrolysis plant according to any one of the claims 1 to 8, **characterized in that** the auxiliary plant unit (12) comprises a nitrogen tank (86) which is connected to a nitrogen pipe (91) of the pipe unit (20).

10. The electrolysis plant according to any one of the claims 1 to 9, **characterized in that** the auxiliary plant unit (12) comprises a control and/or monitoring device (56) for components of the auxiliary plant unit (12) and components of the electrolyzer modules (16).

11. The electrolysis plant according to any one of the claims 1 to 10, **characterized in that** the auxiliary plant unit (12) comprises a conditioning unit (58) for the electrolyzer modules (16).

12. The electrolysis plant according to any one of the claims 1 to 11, **characterized in that** the electrolyzer modules (16) are disposed underneath a canopy of the corresponding electrolyzer unit (14A, 14B).

13. The electrolysis plant according to any one of the claims 1 to 12, **characterized in that** the auxiliary plant unit (12) comprises a canopied inner area (34).

14. The electrolysis plant according to any one of the claims 1 to 13, **characterized in that** the auxiliary plant unit (12) comprises an outer area (32) open to the top.

## Revendications

1. Installation d'électrolyse pour l'affichage de l'hydrogène au moyen de l'électrolyse, l'installation d'électrolyse comprenant un transformateur à haute tension (24) central, deux unités d'électrolyseur (14A, 14B), qui comprend chacun au moins deux modules d'électrolyseur (16) adjacents, qui comprend chacun un électrolyseur (18) et une alimentation en énergie comprenant un transformateur (26) et/ou un redresseur (28), et une unité d'installation auxiliaire (12), les alimentations en énergie des modules d'électrolyseur (16) étant reliées au transformateur à haute tension (24) central et l'unité d'installation auxiliaire (12) étant disposée entre les unités d'électrolyseur (14A, 14B) et étant reliée aux deux unités d'électrolyseur (14A, 14B) par l'intermédiaire d'une unité de tuyau (20) commune de manière à ce que l'unité d'installation auxiliaire (12) est associée avec les deux unités d'électrolyseur (14A, 14B) ensemble, l'unité de tuyau (20) commune comprenant une pluralité de tuyaux qui s'étend à partir de l'unité d'installation auxiliaire (12) aux unités d'électrolyseur (14A, 14B), l'unité d'installation auxiliaire (12) comprenant un absorbeur-neutralisateur (49) pour l'hydrogène, qui est relié à un tuyau (102) de produit de hydrogène de l'unité de tuyau (20) par l'intermédiaire d'un té de branchement (46), le tuyau (102) de produit de hydrogène se branchant à partir des électrolyseurs (18), et un dispositif à refroidissement (98) étant prévu pour les modules d'électrolyseur (16) et étant relié à l'unité de tuyau (20).

2. Installation d'électrolyse selon la revendication 1, **caractérisée en ce que** l'arrangement des unités d'électrolyseur (14A, 14B) est symétrique par rapport à l'unité d'installation auxiliaire (12).

3. Installation d'électrolyse selon la revendication 1 ou la revendication 2, **caractérisée en ce que** l'unité de tuyau (20) comprends des tés de branchement (46) qui sont reliés aux deux unités d'électrolyseur (14A, 14B).

4. Installation d'électrolyse selon l'une quelconque des revendications 1 à 3, **caractérisée en ce que** l'unité d'installation auxiliaire (12) comprend un dispositif (36) à traitement de l'eau qui est relié directement ou indirectement à un tuyau (48) de produit de départ de l'unité de tuyau (20).

5. Installation d'électrolyse selon l'une quelconque des revendications 1 à 4, **caractérisée en ce que** l'unité d'installation auxiliaire (12) comprend un réservoir de lessive (50) qui est relié à un tuyau de lessive (54) de l'unité de tuyau (20).

6. Installation d'électrolyse selon l'une quelconque des revendications 1 à 5, **caractérisée en ce que** l'unité d'installation auxiliaire (12) comprend un réservoir d'hydrogène (80) qui est relié à un tuyau (78) de décharge d'hydrogène relié directement ou indirectement à un tuyau de produit (102) de l'unité de tuyau (20).

7. Installation d'électrolyse selon la revendication 6, **caractérisée en ce que** l'unité d'installation auxiliaire (12) comprend un dispositif (68) de traitement du gaz qui est relié au tuyau (78) de décharge d'hydrogène.

8. Installation d'électrolyse selon la revendication 7, **caractérisée en ce que** l'unité d'installation auxiliaire (12) comprend un compresseur (66) qui est relié au dispositif (68) de traitement de gaz.

9. Installation d'électrolyse selon l'une quelconque des revendications 1 à 8, **caractérisée en ce que** l'unité d'installation auxiliaire (12) comprend un réservoir de nitrogène (86) qui est relié au tuyau de nitrogène (91) de l'unité de tuyau (20).

10. Installation d'électrolyse selon l'une quelconque des revendications 1 à 9, **caractérisée en ce que** l'unité d'installation auxiliaire (12) comprend un dispositif (56) de contrôle et/ou de surveillance pour des composants de l'unité d'installation auxiliaire (12) et pour des composants de modules d'électrolyseur (16).

11. Installation d'électrolyse selon l'une quelconque des revendications 1 à 10, **caractérisée en ce que** l'unité d'installation auxiliaire (12) comprend une unité de climatisation (58) pour les modules d'électrolyseur (16).

12. Installation d'électrolyse selon l'une quelconque des revendications 1 à 11, **caractérisée en ce que** les modules d'électrolyseur (16) sont disposés au-dessous d'une toiture de l'unité d'électrolyseur (14A, 14B) correspondante.

13. Installation d'électrolyse selon l'une quelconque des revendications 1 à 12, **caractérisée en ce que** l'unité d'installation auxiliaire (12) comprend une zone intérieure (34) couverte.

14. Installation d'électrolyse selon l'une quelconque des revendications 1 à 13, **caractérisée en ce que** l'unité d'installation auxiliaire (12) comprend une zone extérieure (32) qui est ouverte vers le haut.
